# FASCICULE DE BREVET EUROPEEN

(11) **EP 0 784 040 B1**
(45) Date de publication et mention de la délivrance du brevet: **18.09.2002**
(21) Numéro de dépôt: 97400074.7
(22) Date de dépôt: 15.01.1997
(51) Int. Cl.: C05G 3/00, C05C 9/00

(54) **Nouvelle composition d'engrais permettant d'améliorer l'efficience de l'azote**
Düngemittel-Zusammensetzung zur Verbesserung der Stickstoffwirksamkeit
Fertiliser composition for improving nitrogen efficiency

(30) Priorité: 15.01.1996 FR 9600379
(43) Date de publication de la demande: 16.07.1997
(73) Titulaire: PHYSIA, 49000 Angers (FR)
(72) Inventeur: Couturier, Stéphane, 53800 Renazé (FR)
(74) Mandataire: Pernez, Helga

(56) Documents cités:
- EP-A- 0 634 380
- WO-A-90/11262
- FR-A- 1 055 421
- US-H- H 620
- DATABASE WPI Section Ch, Week 9403 Derwent Publications Ltd., London, GB; Class C04, AN 94-022738 XP002028957 & JP 05 330 968 A (ISEKI AGRIC MACH MFG CO LTD) , 14 Décembre 1993
- DATABASE WPI Section Ch, Week 8702 Derwent Publications Ltd., London, GB; Class C04, AN 87-011736 XP002028958 & JP 61 270 289 A (KYOWA HAKKO KOGYO KK) , 29 Novembre 1986

## Description

La présente invention concerne une nouvelle composition d'engrais permettant d'améliorer l'efficience de l'azote utilisé comme fertilisant.

La valeur agronomique des plantes cultivées est appréciée à partir du rendement quantitatif et de critères qualitatifs tel que la teneur en protéines des grains récoltés. On entend par amélioration de l'efficience :
- la possibilité d'améliorer au moins un des critères quantitatif(s) ou qualitatif(s) de la récolte avec une quantité d'azote inférieure à celle utilisée dans l'art antérieur pour un même objectif d'amélioration, ou
- la possibilité d'améliorer au moins un des critères ci-dessus à partir d'une quantité d'azote égale à celle utilisée dans l'art antérieur avec un résultat supérieur à celui de l'art antérieur, ou encore
- la possibilité de faire absorber une quantité plus importante d'azote à la plante sans risque pour l'environnement.

On peut utiliser comme indicateurs de cette amélioration de l'éfficience selon l'invention, par exemple dans le cas des céréales, les ratios combinant l'azote disponible ou l'azote apporté (au sol pour la plante ou à la plante directement), à l'azote retrouvé dans la récolte ou dans certaines parties de la plante, ou encore l'azote présent dans la plante entière.

Afin d'augmenter le rendement par hectare et la teneur en protéines de ces plantes, il est proposé dans l'art antérieur plusieurs types d'engrais azotés aux agriculteurs, tels que des ammonitrates, des solutions azotées et de l'urée.

Ces engrais sont constitués de combinaisons de fractions azotées ammoniacales, nitriques et uréique.

Ils sont appliqués par épandage sur la végétation, et pénètrent la plante au niveau du sol par ses racines. Or, ce mode d'application présente les inconvénients suivants :
- Un risque de dommage sur le feuillage en raison des brulures que peut entraîner l'agent azoté présent dans l'engrais, lors de sa descente par gravité vers le sol, suite à l'épandage ou encore par des phénomènes d'éclaboussures.
- Un problème logistique pour les formes solides.
- Une mauvaise diffusion jusqu'aux parties aériennes en raison de conditions hydriques séchantes.
- Un risque de pollution de l'environnement en raison de conditions hydriques excessives.

La présente invention vise à palier les inconvénients ci-dessus, en offrant une nouvelle composition d'engrais azoté permettant d'améliorer l'efficience de l'azote afin :
- d'augmenter le rendement quantitatif, et/ou
- d'améliorer la qualité des plantes, notamment au niveau de leur teneur en protéines, et/ou
- de limiter et maîtriser les risques de pollution rappelés ci-dessus.

Ce but est atteint grâce à une composition comprenant :
- au moins un agent azoté autre que le biuret ou comprenant du biuret à une teneur maximale à 0,5% en poids de la composition totale
- au moins un agent de pénétration dudit agent azoté dans la partie aérienne des plantes, et
- au moins un agent de métabolisation favorisant l'entrée dudit agent azoté dans le cycle naturel de synthèse des protéines, lesdits agents de pénétration et de métabolisation étant différents de l'agent azoté.

L'agent azoté est choisi parmi les composés ou compositions renfermant au moins un atome d'azote et capable une fois qu'il a pénétré à l'intérieur de la plante de rentrer dans le cycle naturel de synthèse des protéines par la plante. De tels composés ou compositions sont par exemple l'urée, l'ammonitrate, l'ammoniac, les nitrates, une solution azotée liquide à usage agricole telle que la solution 390 (encore appelée dans l'art antérieur solution 39% ou solution azotée liquide), l'azote organique, un engrais azoté usuel, ou un sous produit, brut ou transformé, agricole ou industriel, riche en azote organique ou minéral, utilisable en agriculture, ou encore un mélange de ceux-ci.

La composition d'engrais azoté de l'invention vise à fournir aux cultures un apport d'azote d'au moins 12 Kg par hectare.

L'agent de pénétration de l'agent azoté dans la partie aérienne des plantes peut être un agent mouillant, tensio-actif aussi désigné "surfactant", ou pénétrant, avec ou sans composante à rôle phytoeffecteur comme : les acides minéraux et leurs dérivés, des polymères solubles comme les éthers d'alkylarylpolyglycol, les alkylphenols, les carbomethylcellulose, les polyamides, les dérivés de l'éthylène quelque soit leur degré d'oxydation ou d'éthoxylation et de polymérisation, les dérivés du glycol. Il peut s'agir aussi de dérivés des savons et saponines, de dérivés d'algues, de dérivés du soja, de dérivés du pin ou d'autres végétaux, ou encore des huiles minérales ou organiques, méthylées ou non, polyéthylées ou non, paraffiniques ou non, des terpènes, des cétones comme la méthyléthylcétone, des amines comme les alkarylamines, des amides, des thiols, des alcools comme l'isopropanol, ou encore des acides organiques (acide humique, acide propionique, acide pyrrolidone carboxylique, acide butirique, acide citrique, acide propionique, acide acétique, etc...) et leurs dérivés (sulfonés, esterifiés, sels, quelque soit leur degré d'hydratation, etc...), ou autres subtances usuelles dans le domaine de la formulation phytosanitaire incluant les formes anioniques, cationiques et non ioniques, hydrophobes ou hydrophiles de ces substances ou de leurs dérivés. Ces agents de pénétration assurent une meilleure répartition sur le feuillage et/ou favorisent le franchissement de la barrière cuticulaire stomatique ou extra stomatique, par exemple :
- par une solubilisation partielle de celle-ci, et/ou
- par une humectation du milieu cuticulaire améliorant ainsi sa fluidité, et/ou
- par une diminution du caractère hydrophobe de la cuticule, et/ou
- par une modification des polarités de certains composants de cette barrière et/ou de la bouillie de pulvérisation.

A titre d'agent de pénétration, on préfère ceux choisi dans le groupe comprenant : les dérivés des algues, les terpènes, des ethers d'alkylarylpolyglycol, les huiles méthylées ou polyméthylées, les acides citrique, pyrrolidone carboxylique, propionique et leurs dérivés, ou un mélange de ceux-ci.

L'agent de métabolisation entrant dans la composition d'engrais de l'invention peut être par exemple un élément nutritif, un complexe chimique minéral ou organique, un micro-organisme, influençant l'activité des enzymes nitrates réductases et/ou influant sur la chaîne biochimique d'assimilation de l'azote. A titre d'exemples non limitatifs de tels agents de métabolisation, on peut citer :
- des éléments minéraux, comme le calcium, le soufre, le potassium, etc ...,
- des oligoélements, comme le molybdène, le magnesium, le cuivre, le manganèse, le fer, le zinc, le bore, le chlore, le silicium, le sodium, le cobalt, l'iode, le selenium, etc ...,
- des acides minéraux, comme l'acide sulfurique, nitrique, etc ...,
- des acides organiques, comme les acides lactique, acétique, cétoniques, citrique, malique, glycollique, tartrique, aspartique, glutamique, etc ...,
- des acides aminés, comme le tryptophane, la lysine, la méthionine, l'alanine, la valine, la leucine, la tyrosine, la phénylalanine, la glutamine, la proline, la glycine, la serine, la prolamine,etc ...,
- les dérivés fonctionnels des acides précédents,
- des enzymes, comme une nitrate réductase, aspartate kinase, glutamine synthétase, etc ...
- des micro-organismes, comme des bactéries,
- des molécules organiques complexes telles que la caseine, les bétaïnes, des phytohormones,etc ....

Ces molécules sont citées par de nombreux auteurs comme influant sur le métabolisme; parmi ceux-ci, on peut citer à propos des minéraux, l'ouvrage de A. Loue (Les oligo-éléments en agriculture, 1987, Agri-Nathan international). En ce qui concerne le rôle des autres molécules envisagées précédemment, on peut citer notamment : M.-L. Champigny, compte rendu de l'academie d'agriculture de France, No. 8, Vol. 78, 1992 ; J.-F. Morot-Gaudry, Colloque azote et protéines, Reims, France 1996 ; Robin, Communication sur le métabolisme azoté, colloque sur la physiologie du maïs, 1983, Royan, France ; B. Chance et al., Biological and biochemical oscillators, Eds. B. Chance Academic press New-York and London, 1973.

Parmi ces agents de métabolisation, on préfère ceux choisis dans le groupe comprenant : le calcium, le magnésium, le molybdène, les bétaïnes, les acides acétique, citrique, glycolique, glutamique, aspartique, la proline, et leurs dérivés, ou un mélange de ceux-ci.

Selon une forme de réalisation toute particulière de l'invention, l'agent de métabolisation et l'agent de pénétration sont un seul et unique agent associé à l'agent azoté dans la composition de l'invention. A titre d'exemple d'une telle formulation on peut citer une crème d'algue ou d'autres végétaux, des acides tels que l'acide pyrrolidone carboxylique, l'acide citrique, l'acide acetique, les acides aminés, des métabolytes naturels ou de synthèse, etc...

Outre les agents azoté, de pénétration et de métabolisation, la composition d'engrais azoté de l'invention peut comprendre divers agents de formulation, additifs ou véhicules généralement utilisés dans le domaine des engrais ou des spécialités phytosanitaires, comme le glycol et ses dérivés, des supports inertes, des diluants, des dissolvants, des liants des complexants, conservateurs, anti-évaporants, des anti-moussants, des colorants, des tampons acides ou alcalins, des alourdisseurs, des agents de stabilisation, des agents de protection tels que gelose, gélatine, gomme, mucilage, matières pectiniques, empois divers, glucose, lactose, saccharose, maltose, acides humiques et dérivés, silice, amines colloïdales, algines et alginates, polyethylène-glycol incluant les molécules connues sous le terme anglais "safener". L'invention envisage toutes molécules destinées à contribuer à une détoxification par la plante de matières actives, notamment de type herbicides.

La composition d'engrais azoté de l'invention est avantageusement appliquée par pulvérisation au niveau de la partie aérienne des plantes. Aussi, la composition de l'invention se présente avantageusement sous une forme liquide pulvérisable.

En conséquence, dans certains modes de réalisation où les agents azotés, de pénétration et de métabolisation, sont solides, la composition de l'invention peut comprendre un véhicule liquide dans lequel les agents précédents sont mis en solution ou en suspension.

La composition d'engrais selon l'invention peut être préparée en mélangeant chacun des agents précédents, le cas échéant dans un véhicule liquide adapté, ou encore en mélangeant une formulation préfabriquée d'agents de pénétration et de métabolisation avec un agent azoté. L'invention a donc aussi pour objet une formulation, se présentant sous forme liquide ou solide, d'agent de pénétration et de métabolisation ainsi que des divers agents de formulation cités précédemment, prête à l'emploi, utile pour la préparation d'une composition d'engrais définie précédemment et se présentant elle-même sous forme liquide ou solide. La composition d'engrais azoté peut être alors réalisée par l'utilisateur ou le distributeur en mélangeant la formulation prête à l'emploi précédente avec un agent azoté défini précédemment.

L'invention concerne enfin un procédé de traitement en champ de plantes consistant à pulvériser par tout moyen approprié une composition d'engrais azoté précédente au niveau de la partie aérienne desdites plantes.

D'autres avantages et caractéristiques de l'invention sont donnés dans les exemples qui suivent qui ne sauraient être interprétés comme une limitation quelconque à la portée de l'invention.

### I - Exemples de compositions d'engrais de l'invention selon l'invention.

### 1) Exemple 1.

- Agent azoté : solution 390 (pour au moins 12 Kg/Ha de N) ou autre solution comme celles définies dans les directives CEE 76116, 88183, 8794, 80876 et 88126.
- Agent de métabolisation : Ca et/ou autre minéral précédement cité et/ou acide(s) organique(s) ou minéraux. Dans le cas desdits acides à une concentration comprise entre 0,0001 M à 0,1 M sur la base du volume total de bouillie pulvérisé par unité de surface et en fonction de la capacité de l'acide à contribuer à l'intégration de l'azote dans les mécanismes biochimiques.
- Agent de pénétration : Acide organique.
- D'autres agents de formulation usuels définis précédemment.

### 2) Exemple 2.

- Agent azoté : solution 390 (pour 20 Kg/Ha de N) ou autre solution comme celles définies dans les directives CEE 76116, 88183, 8794, 80876 et 88126.
- Agent de métabolisation : Ca et/ou autre minéral précédement cité et/ou acide(s) organique(s) ou minéraux. Dans le cas desdits acides à une concentration comprise entre 0,0001 M et 0,1 M sur la base du volume total de bouillie pulvérisé par unité de surface et en fonction de la capacité de l'acide à contribuer à l'intégration de l'azote dans les mécanismes biochimiques.
- Agent de pénétration : crème d'algue (1 L/Ha).
- D'autres agents de formulation usuels définis précédemment.

### 3) Exemple 3.

- Agent azoté : Solution azotée 390 pour 20 Kg/Ha de N.
- Agent de métabolisation : Ca 1150 g/Ha et Mo 35 g/Ha et acides organiques entre 0,01 M et 0,001 M sur la base du volume total de bouillie pulvérisé par unité de surface (100 à 500 L/Ha).
- Agent de pénétration : Huile végétale méthylée 0,25 L/Ha.
- Agents de formulation usuels

### II - Fertilisation foliaire.

Les compositions des exemples 1, 2 et 3 ont tout d'abord été testées en phytotron pour s'assurer de leur selectivité, puis les travaux ont été effectués sur des pots de 15 x 15 x 15 cm comportant chacun 12 pieds de blé au stade montaison. Le cycle climatique était caractérisé par une forte amplitude thermique. Le cycle comportait 24H d'adaptation au sortir de la serre, puis la pulvérisation, puis 48H au terme desquelles intervenait une notation de sélectivité sur le feuillage, qui s'est révélé satisfaisante.

### 1) Premier protocole.

Après les tests ci-dessus, les combinaisons ont été expérimentées en plein champ sur un dispositif à répétitions.

On compare souvent des résultats obtenus par fertilisation foliaire à ceux obtenus par la fertilisation au sol. La Demanderesse a procédé à une comparaison entre différentes pulvérisations foliaires beaucoup plus exigeantes pour le produit.

L'expérimentation a été réalisée dans les condition suivantes :
- au printemps sur Blé tendre, variété Sidéral, semé en Novembre de l'année précédente,
- peuplement sortie hiver:270 pieds/m²,
- fertilisation azotée au sol gérée à l'optimum soit 180 Kg/Ha d'azote déterminée selon la méthode des bilans (P. Gates, 1995, "Ecophysiologie du blé", Tech. et Doc, Ed. Lavoisier).
- sauf pour le témoin, pulvérisation post-épiaison effectuée en début de journée sur un feuillage réssuyé à un volume de bouillie et à une pression usuels. Aucune brûlure n'a été constatée.

Un extrait des résultats obtenus est rapporté dans le tableau 1 ci-desous.

**Tableau 1**

| Objets | Rendement Quintaux/Ha | Protéines (%) | Groupes Statistiques | N (*) Grains |
|---|---|---|---|---|
| Témoin | 81,60 | 10,30 | B | 147,6 |
| Exemple 1 | 82,70 | 11,27 | A | 163,5 |
| Exemple 2 | 84,26 | 10,97 | AB | 162,1 |
| Exemple 3 | 83,25 | 10,97 | AB | 160,2 |
| Solution 390 seule | 81,86 | 10,80 | AB | 155,1 |

| Critères statistiques | | | | |
|---|---|---|---|---|
| Ecart type | 2,26 | 0,29 | | 6,4 |
| Coéfficient de variation | 2,7 | 2,7 | | 4,1 |
| Seuil de signification (Proba F) | 0,6212 | 0,0383 | | 0,0862 |

| | | | | |
|---|---|---|---|---|
| (*): Quantité d'azote retrouvée dans le grain récolté en Kg/Ha. | | | | |

Les groupes statistiques sont déterminés selon le test de Newman et Keuls.

Ce protocole a été réalisé sur deux autres sites différents avec une composition de l'exemple 1, la solution azotée 390 seule et un témoin. Le regroupement des résultats obtenus sur ces trois sites sont rapportés dans le tableau 2 ci-dessous.

**Tableau 2**

| Objets | Rendement Quintaux/Ha | Proteines (%) | Gr. St. | N (*) Grains | Gr. St. |
|---|---|---|---|---|---|
| Exemple 1 | 82,13 | 13,26 | A | 188,2 | A |
| Solution 390 seule | 81,36 | 13,01 | A | 182,9 | AB |
| Témoin | 80,92 | 12,46 | B | 173,7 | B |
| Critères statistiques | | | | | |
| Ecart type | 1,12 | 0,18 | | 4,55 | |
| Seuil de signification (Proba F) | 0,4787 | 0,0142 | | 0,0433 | |

| | | | | | |
|---|---|---|---|---|---|
| (*) : Quantité d'azote retrouvée dans le grain récolté en Kg/Ha. | | | | | |
| Gr. St. : Groupes statistiques déterminés selon le test de Newman et Keuls. | | | | | |

### 2) Second protocole.

Sur le même site expérimental que celui correspondant au tableau 1 était implanté un second protocole permettant de statuer sur l'intérêt d'un apport au sol de 50Kg/Ha d'azote supplémentaire, dont l'analyse en terme de différence par rapport au témoin illustre la formidable différence d'efficience que procure l'invention.

Un extrait des résultats de ce second protocole est rapporté dans le tableau 3 ci-dessous.

**Tableau 3**

| | Rendement Quintaux/Ha | Protéines (%) | Gr. St. | N (*) Grains | Gr. St. |
|---|---|---|---|---|---|
| N (bilan (Témoin) | 83,43 | 10,50 | A | 154,2 | A |
| N bilan + 50N | 84,16 | 11,40 | A | 168,4 | A |
| Critères statistiques | | | | | |
| Ecart type | 2,77 | 0,41 | | 8,8 | |
| Coéfficient de variation | 3,4 | 3,9 | | 5,8 | |
| Seuil de signification (Proba F) | 0,1918 | 0,0053 | | 0,0103 | |

On constate que sur les 50 Kg/Ha d'azote supplémentaire apportés, il ne s'en retrouve que 14,2 dans le grain récolté, du fait de la combinaison entre les variations de rendement et de proteines qui est admise et fréquemment constatée. A ceci, il faut comparer les 7,5 Kg/Ha supplémentaires retrouvés dans le grain récolté suite à une pulvérisation foliaire d'azote seule qui comporte de gros risques de brûlure et les 14,5 Kg/Ha d'azote retrouvés dans le grain récolté suite à une pulvérisation foliaire d'une composition de l'invention ne renfermant elle aussi que 20 Kg/Ha d'azote.

Selon que l'on utilise la référence 50 Kg/Ha au sol ou la référence 20 Kg/Ha en pulvérisation foliaire, on constate une multiplication de l'efficience par 2 à 2,5.

La mise en évidence de cet effet est encore renforcée par les résultats issus du regroupement des essais sur les trois sites rapportés précédemment.

## Revendications

1. Composition d'engrais azoté **caractérisée en ce qu'**elle comprend au moins un agent azoté autre que le biuret ou comprenant du biuret à une teneur maximale à 0,5% en poids de la composition totale, au moins un agent de pénétration dudit agent azoté dans la partie aérienne des plantes, et au moins un agent de métabolisation favorisant l'entrée dudit agent azoté dans le cycle naturel de synthèse des protéines, lesdits agents de pénétration et de métabolisation étant différents de l'agent azoté.

2. Composition selon la revendication 1, **caractérisée en ce que** l'agent azoté est choisi parmi les composés ou compositions renfermant au moins un atome d'azote et capable une fois qu'il a pénétré à l'intérieur de la plante de rentrer dans le cycle naturel de synthèse des protéines par la plante.

3. Composition selon la revendication 2, **caractérisée en ce que** l'agent azoté est choisi parmi l'urée, l'ammonitrate l'ammoniac, les nitrates, une solution azotée liquide à usage agricole, l'azote organique, un engrais azoté usuel, ou un sous-produit brut ou transformé, agricole ou industriel, riche en azote organique ou minéral, utilisable en agriculture, ou encore un mélange de ceux-ci.

4. Composition selon l'une quelconque des revendications 1 à 3, **caractérisée en ce que** l'agent de pénétration de l'agent azoté dans la partie aérienne des plantes est une substance assurant une meilleure répartition de l'agent azoté sur le feuillage et/ou favorisant le franchissement par l'agent azoté de la barrière cuticulaire stomatique ou extra-stomatique.

5. Composition selon la revendication 4, **caractérisée en ce que** l'agent de pénétration de l'agent azoté est choisi parmi les mouillant, tensio-actif, ou pénétrant, avec ou sans composante à rôle phytoeffecteur.

6. Composition selon l'une quelconque des revendications 4 ou 5, **caractérisée en ce que** l'agent de pénétration est choisi dans le groupe comprenant : les dérivés des algues, les terpènes, des éthers d'alkylarylpolyglycol, les huiles méthylées ou polyméthylées, les acides citrique, pyrrolidone carboxylique, propionique et leurs dérivés, ou un mélange de ceux-ci.

7. Composition selon l'une quelconque des revendications précédentes, **caractérisée en ce que** l'agent de métabolisation est un élément nutritif, un complexe chimique minéral ou organique, un microorganisme, influençant l'activité des enzymes nitrate réductases et/ou influant sur la chaîne biochimique d'assimilation de l'azote.

8. composition selon la revendication 7, **caractérisée en ce que** l'agent de métabolisation est choisi dans le groupe comprenant : le calcium, le magnésium, le molybdène, les bétaïnes, les acides acétique, citrique, glycolique, glutamique, aspartique, la proline, et leurs dérivés, ou un mélange de ceux-ci.

9. Composition selon l'une quelconque des revendications précédentes, **caractérisée en ce qu'**elle permet un apport d'azote d'au moins 12 kg par hectare.

10. Composition selon l'une quelconque des revendications précédentes, **caractérisée en ce qu'**elle comprend :
- une solution 390 comme agent azoté, pour un apport d'azote d'au moins 12 kg par hectare,
- au moins un agent de métabolisation choisi parmi des minéraux, des acides organiques ou minéraux, ou un mélange de ceux-ci, et dans le cas desdits acides, à une concentration comprise entre 0,0001 M et 0,1 M sur la base du volume total de bouillie pulvérisé par unité de surface,
- au moins un acide organique comme agent de pénétration.

11. Composition selon l'une quelconque des revendications 1 à 9, **caractérisée en ce qu'**elle comprend :
- une solution 390 comme agent azoté, pour un apport d'azote d'au moins 12 kg par hectare,
- au moins un agent de métabolisation choisi parmi des minéraux, des acides organiques ou minéraux, ou un mélange de ceux-ci, et dans le cas desdits acides, à une concentration comprise entre 0,0001 M et 0,1 M sur la base du volume total de bouillie pulvérisé par unité de surface,
- une crème d'algue, comme agent de pénétration, à une concentration permettant l'apport de 1 litre par hectare dudit agent de pénétration.

12. Composition selon l'une quelconque des revendications 1 à 9, **caractérisée en ce qu'**elle comprend :
- une solution 390 comme agent azoté, pour un apport d'azote d'au moins 12 kg par hectare,
- comme agent de métabolisation, un mélange constitué :
• de calcium et de molybdène à une concentration permettant respectivement l'apport de 1150 grammes et 35 grammes par hectare de calcium et de molybdène, et
• d'acides organiques à une concentration comprise entre 0,01 M et 0,001 M sur la base du volume total de bouillie pulvérisé par unité de surface,
- une huile végétale méthylée, comme agent de pénétration, à une concentration permettant l'apport de 0,25 litre par hectare dudit agent de pénétration.

13. Composition selon l'une quelconque des revendications 1 à 9, **caractérisée en ce que** l'agent de métabolisation de l'agent azoté dans le cycle naturel de synthèse des protéines constitue également un agent de pénétration dudit agent azoté dans la partie aérienne des plantes.

14. Composition selon l'une quelconque des revendications précédentes, **caractérisée en ce qu'**elle comprend outre les agents azotés, de pénétration et de métabolisation, divers additifs ou véhicules généralement utilisés dans le domaine des engrais ou des spécialités phytosanitaires.

15. Composition liquide pulvérisable comprenant une composition d'engrais azoté selon l'une quelconque des revendications précédentes et un véhicule liquide dans lequel ladite composition d'engrais azoté est en solution ou en suspension.

16. Une formulation prête à l'emploi, solide ou liquide, utile pour la préparation d'une composition d'engrais azoté selon l'une quelconque des revendications 1 à 15, renfermant au moins un agent de pénétration d'un agent azoté et au moins un agent de métabolisation dudit agent azoté.

17. Procédé de traitement en champ de plantes, consistant à pulvériser au niveau de la partie aérienne desdites plantes, par tout moyen approprié, une composition selon l'une quelconque des revendications 1 à 15 ou une composition préparée à partir d'une formulation selon la revendication 16..

## Claims

1. A nitrogen-containing fertilizer composition **characterized in that** it comprises at least one nitrogen-containing agent other than biuret or comprising biuret with a maximum content of 0.5 weight percent of the total composition, at least one agent for penetration of said nitrogen-containing agent into the aerial portion of plants, or at least a metabolization agent favoring the entry of said nitrogen-containing agent into the natural cycle of protein synthesis, said penetration and metabolization agents being different from the nitrogen-containing agent.

2. The composition according to claim 1, **characterized in that** the nitrogen-containing agent is selected from compounds or compositions containing at least one nitrogen atom and once it has penetrated the inside of the plant, capable of entering the natural cycle for protein synthesis by the plant.

3. The composition according to claim 2, **characterized in that** the nitrogen-containing agent is selected from urea, ammonitrate, ammonia, nitrates, a nitrogen-containing liquid solution for agricultural use, organic nitrogen, a common nitrogen-containing fertilizer or a raw or processed, agricultural or industrial by-product, rich in organic or inorganic nitrogen, which may be used in agriculture, or further a mixture thereof.

4. The composition according to any of claims 1 to 3,
**characterized in that** the agent for penetration of the nitrogen-containing agent into the aerial portion of the plants is a substance providing better distribution of the nitrogen-containing agent over the foliage and/or favoring the crossing of the stomatal or extra-stomatal cuticular barrier by the nitrogen-containing agent.

5. The composition according to claim 4, **characterized in that** the agent for penetration of the nitrogen-containing agent is selected among wetting, surfactant, or penetrating agents, with or without components with a phyto-effective role.

6. The composition according to any of claims 4 or 5, **characterized in that** the penetration agent is selected from the group comprising: derivatives of algae, terpenes, alkylarylpolyglycol ethers, methylated or polymethylated oils, citric, pyrrolidone-carboxylic, propionic acids, and their derivatives, or a mixture thereof.

7. The composition according to any of the preceding claims, **characterized in that** the metabolization agent is a nutrient, an inorganic or organic chemical complex, a microorganism, influencing the activity of nitrate reductase enzymes and/or influencing the nitrogen assimilation biochemical chain.

8. The composition according to claim 7, **characterized in that** the metabolization agent is selected from the group comprising: calcium, magnesium, molybdenum, betaines, acetic, citric, glycolic, glutamic, aspartic acids, proline, and their derivatives or a mixture thereof.

9. The composition according to any of the preceding claims, **characterized in that** it provides a nitrogen supply of at least 12 kg per hectare.

10. The composition according to any of the preceding claims, **characterized in that** it comprises:
- a 390 solution as a nitrogen containing-agent, for a nitrogen supply of at least 12 kg per hectare,
- at least one metabolization agent selected from minerals, organic or inorganic acids, or a mixture thereof, and in the case of said acids, with a concentration between 0.0001 M and 0.1 M based on the total volume of spray mixture per unit of area,
- at least one organic acid as a penetration agent.

11. The composition according to any of claims 1 to 9, **characterized in that** it comprises:
- a 390 solution as a nitrogen-containing agent, for a nitrogen supply of at least 12 kg per hectare,
- at least one metabolization agent selected from minerals, organic or inorganic acids or a mixture thereof, and in the case of said acids, with the concentration between 0.0001 M and 0.1 M based on the total volume of spray mixture per unit of area,
- an algal cream, as a penetration agent, with a concentration providing the supply of one liter of said penetration agent per hectare.

12. The composition according to any of claims 1 to 9, **characterized in that** it comprises:
- a 390 solution as a nitrogen-containing agent, for a nitrogen supply of at least 12 kg per hectare,
- as a metabolization agent, a mixture consisting of:
calcium and molybdenum with a concentration providing a supply of 1,150 grams and 35 grams of calcium and molybdenum per hectare, respectively, and
organic acids with a concentration between 0.01 M and 0.001 M based on the total volume of spray mixture per unit of area,
- a methylated vegetable oil, as a penetration agent with a concentration providing the supply of 0.25 liter of said penetration agent per hectare.

13. The composition according to any of claims 1 to 9, **characterized in that** the agent for metabolizing the nitrogen-containing agent in the natural protein synthesis cycle is also an agent for penetration of said nitrogen-containing agent into the aerial portion of the plants.

14. The composition according to any of the preceding claims, **characterized in that** it further comprises nitrogen-containing, penetration and metabolization agents, different additives or carriers generally used in the field of fertilizers or phyto-sanitary specialties.

15. A sprayable liquid composition comprising a nitrogen-containing fertilizer composition according to any of the preceding claims and a liquid carrier wherein said nitrogen-containing fertilizer composition is in solution or in suspension.

16. A ready-to-use formulation, either solid or liquid, used for preparing a nitrogen-containing fertilizer composition according to any of claims 1 to 15, containing at least one agent for penetration of a nitrogen-containing agent, and at least one agent for metabolizing said nitrogen-containing agent.

17. A method for treating plants in the field, consisting in spraying, at the level of the aerial portion of said plants, by any suitable means, a composition according to any of claims 1 to 15 or a composition prepared from a formulation according to claim 16.

## Patentansprüche

1. Chemische Zusammensetzung eines Stickstoffdüngers, die **dadurch gekennzeichnet ist, dass** sie mindestens ein Stickstoffmittel enthält, mit Ausnahme von Biuret oder mit einen Biuretgehalt von maximal 0,5% des Gewichts der gesamten chemischen Zusammensetzung, mindestens einen Stoff des erwähnten Stickstoffmittels, der in den Stiel der Pflanzen eindringt und mindestens einen Metaboliten, der das Eindringen des erwähnten Stickstoffmittels in den natürlichen Kreislauf der Proteinbiosynthese begünstigt. Die genannten Durchdringungsstoffe und Metabolite unterscheiden sich von dem Stickstoffmittel.

2. Chemische Zusammensetzung gemäß dem Patentanspruch 1, die **dadurch gekennzeichnet ist, dass** das Stickstoffmittel unter den Verbindungen oder chemischen Zusammensetzungen ausgesucht wurde, die mindestens ein Stickstoff-atom enthalten und die in der Lage sind, sobald sie in die Pflanze eingedrungen sind, in den natürlichen Kreislauf der Proteinbiosynthese der Pflanze überzugehen.

3. Chemische Zusammensetzung gemäß dem Patentanspruch 2, die **dadurch gekennzeichnet ist, dass** das Stickstoffmittel unter Harnstoff, Ammoniaksalpeterdünger, Ammoniak, Nitraten, einer flüssigen Stickstofflösung für die Nutzung in der Landwirtschaft, organisch gebundenem Stickstoff, einem gängigen Stickstoffdünger oder einem unbehandelten oder umgewandelten Nebenprodukt, das für den landwirtschaftlichen oder industriellen Einsatz bestimmt ist, mit einem hohen Anteil an organisch gebundenem oder mineralischem Stickstoff, für den Einsatz in der Landwirtschaft oder auch einer Mischung der genannten Mittel ausgesucht wurde.

4. Chemische Zusammensetzung gemäß einem der beliebigwählbaren Patentansprüche 1 bis 3. Sie ist **dadurch gekennzeichnet, dass** es sich bei dem Stoff des Stickstoffmittels, der den Stiel der Pflanzen durchdringt, um eine Substanz handelt, die eine bessere Verteilung des Stickstoffmittels auf dem Blattwerk gewährleistet und/oder ein Überwinden der spaltbaren oder extra-spaltbaren Oberflächenbarriere unterstützt.

5. Chemische Zusammensetzung gemäß dem Patentan-spruch 4, die **dadurch gekennzeichnet ist, dass** das Durchdringungsmittel des Stickstoffmittels unter Benetzungsmitteln, Tensiden oder Durchdringungsmittel mit oder ohne phytoeffektivem Bestandteil ausgewählt wird.

6. Chemische Zusammensetzung gemäß dem beliebig wählbaren Patentanspruch 4 oder 5. Sie ist **dadurch gekennzeichnet, dass** das Durchdringungsmittel aus folgender Gruppe ausgesucht wurde: Algenderivate, Terpen, Alkylarylpolyglycolether, methylhaltige oder polymethylhaltige Öle , Zitronensäure, Pyrrolidon der Carboxylgruppe, Propionsäure und ihre Derivate oder eine Mischung aus diesen Substanzen.

7. Chemische Zusammensetzung gemäß einem der oben genannten, beliebig wählbaren Patentansprüche. Sie ist **dadurch gekennzeichnet, dass** der Metabolit ein Nährstoff, ein chemischer, mineralischer oder organischer Komplex ist, ein Mikroorganismus, der die Aktivität der Nitrat-Reduktase-Enzyme beeinflusst und/ oder keinen Einfluss auf die Aktivität der biochemischen Kette der Stickstoffassimilation hat.

8. Chemische Zusammensetzung gemäß dem Patentanspruch 7, die **dadurch gekennzeichnet ist, dass** der Metabolit aus folgender Gruppe ausgewählt wurde: Kalium, Magnesium, Molybdän, Betain, Essigsäure, Zitronensäure, Glykolsäure, Glutaminsäure, Asparaginsäure, Prolin sowie deren Derivate oder eine Mischung aus ihnen.

9. Chemische Zusammensetzung gemäß einem der oben genannten, beliebig wählbaren Patentansprüche. Sie ist **dadurch gekennzeichnet, dass** sie eine Stickstoffzufuhr von mindestens 12 kg pro Hektar zulässt.

10. Chemische Zusammensetzung gemäß einem der oben genannten, beliebig wählbaren Patentansprüche. Sie ist **dadurch gekennzeichnet, dass** sie folgende Substanzen enthält:
- eine Lösung 390 als Stickstoffmittel für eine Stickstoffzufuhr von mindestens 12 kg pro Hektar.
- mindestens einen Metaboliten, der aus Mineralien, organischen oder mineralischen Säuren oder einer Mischung aus diesen ausgewählt wird. Im Fall der genannten Säuren liegt die Konzentration zwischen 0,0001 M und 0,1 M basierend auf dem Gesamtvolumen des Spritzmittels, das pro Flächeneinheit versprüht wird,
- mindestens eine organische Säure als Durchdringungsstoff.

11. Chemische Zusammensetzung gemäß einem der beliebig wählbaren Patentansprüche 1 bis 9. Sie ist **dadurch gekennzeichnet, dass** sie folgende Substanzen enthält:
- eine Lösung 390 als Stickstoffmittel für eine Stickstoffzufuhr von mindestens 12 kg pro Hektar,
- mindestens einen Metaboliten, der aus Mineralien, organischen oder mineralischen Säuren oder einer Mischung aus diesen ausgewählt wird. Im Fall der genannten Säuren liegt die Konzentration zwischen 0,0001 M und 0,1 Mbasierend auf dem Gesamtvolumen des Spritz-mittels, das pro Flächeneinheit versprüht wird,
- eine Algenpaste als Durchdringungsstoff in einer Konzentration, die die Zufuhr von 1 Liter des genannten Durchdringungsstoffes pro Hektar zulässt.

12. Chemische Zusammensetzung gemäß einem der beliebig wählbaren Patentansprüche 1 bis 9. Sie ist **dadurch gekennzeichnet, dass** sie folgende Substanzen enthält:
- eine Lösung 390 als Stickstoffmittel für eine Stickstoffzufuhr von mindestens 12 kg pro Hektar,
- als Metabolit, eine Mischung, die sich aus folgenden Substanzen zusammensetzt:
aus Kalzium und Molybdän, in einer Konzentration, die eine Zufuhr von 1150 Gramm Kalzium und Gramm Molybdän pro Hektar zulässt und aus organischen Säuren mit einer Konzentration zwischen 0,01 M und 0,001 M basierend auf dem Gesamtvolumen des Spritzmittels, das pro Flächeneinheit versprüht wird,
- ein methylhaltiges Pflanzenöl als Durchdringungsstoff, in einer Konzentration, die eine Zufuhr von 0,25 Liter dieses Durchdringungsstoffes pro Hektar zulässt.

13. Chemische Zusammensetzung gemäß einem der beliebig wählbaren Patentansprüche 1 bis 9. Sie ist **dadurch gekennzeichnet, dass** der Metabolit des Stickstoffmittels im natürlichen Kreislauf der Proteinbiosynthese ebenso als Durchdringungsstoff des genannten Stickstoffmittels im Stiel der Pflanzen wirkt.

14. Chemische Zusammensetzung gemäß einem der oben genannten, beliebig wählbaren Patentansprüche. Sie ist **dadurch gekennzeichnet, dass** sie, abgesehen von den Stickstoffmitteln, den Durchdringungsmitteln und den Metaboliten, verschiedene Zusatzstoffe oder Lösungsmittel enthält, die im allgemeinen im Bereich der Düngemittel oder Pflanzenschutzmittel verwendet werden.

15. Flüssige chemische Zusammensetzung, die versprüht werden kann. Sie enthält eine chemische Zusammensetzung von Stickstoffdünger gemäß einem der oben genannten, beliebig wählbaren Patentansprüche sowie ein flüssiges Lösungsmittel, in dem die besagte chemische Zusammensetzung des Stickstoffdüngers enthalten ist und zwar in gelöstem oder ungelöstem Zustand.

16. Eine einsatzfertige Rezeptur, in festem oder flüssigem Zustand, erforderlich für die Herstellung einer chemischen Zusammensetzung von Stickstoffdünger gemäß einem der beliebig wählbaren Patentansprüche 1 bis 15. Sie enthält mindestens einen Durchdringungsstoff eines Stickstoffmittels und mindestens einen Metaboliten des genannten Stickstoffmittels.

17. Behandlungsverfahren auf Pflanzenfeldern, das darin besteht, mit einem geeigneten Hilfsmittel eine chemische Zusammensetzung auf die Pflanzenstiele zu versprühen und zwar gemäß einem der beliebig wählbaren Patentansprüche 1 bis 15 oder eine chemische Zusammensetzung, die aus einer Rezeptur gemäß dem Patentanspruch 16 hergestellt wird.
